# EUROPEAN PATENT APPLICATION

(11) **EP 4 131 575 A1**
(43) Date of publication of application: **08.02.2023**
(21) Application number: 21189925.7
(22) Date of filing: 05.08.2021
(51) Int. Cl.: H01M 10/613, H01M 10/625, H01M 10/6554, H01M 10/6556

(54) **COOLING ASSEMBLY**

(71) Applicant: Valeo Vymeniky Tepla S.r.o., 26753 Zebrak (CZ)
(72) Inventor: BILEK, Petr, 267 53 Zebrak (CZ); KARES, Michal, 267 53 Zebrak (CZ); TICHY, Pavel, 267 53 Zebrak (CZ); JIRSA, Jakub, 267 53 Zebrak (CZ)
(74) Representative: Valeo Systèmes Thermiques

(57) **Abstract**

An object of an invention is, among others, a cooling assembly (100) for an electric vehicle comprising: a cooling unit (200) comprising fluid channels (210), a first and a second plate (201, 202) joined in a liquid-tight manner by their peripheral edges (201a, 201b), the first plate (201) being stamped so as to form a plurality of channels (210) for a first fluid separated by raised ribs (211), the second plate (202) comprising a substantially flat surface, wherein the cooling assembly (100) further comprises a frame (300) fixed to the cooling unit (200), wherein the frame (300) is made of different material than the cooling unit (200).

## Description

### FIELD OF THE INVENTION

The invention relates to a cooling assembly. In particular, the invention relates to cooling assembly for electric vehicles or hybrid vehicles.

### BACKGROUND OF THE INVENTION

The invention relates to the field of plate heat exchangers, energy storage devices, in particular for cooling batteries for hybrid vehicles or electric vehicles.

Cooling plates with channels are already known. These channels, in which a heat transfer fluid circulates, allow calories to be taken from the batteries and released at a distance from the heat exchanger. This allow to maximize the energy capacity of the battery and allows using of so-called fast charging.

A fast charging phase of the electric storage device or battery cells, which consists of charging the electric storage device at a high voltage and amperage, it is aimed to charge the electric storage device in a maximum time of a few tens of minutes. This rapid charging involves heating of the electrical storage device which must be counteracted by effective cooling.

During fast charging, the power generated by the battery is very high, and this is the dimensioning point for the system. In order to extract this thermal power, usually between 10 and 20kW, the exchange surfaces between a heat transfer fluid and the electric cells must be increased.

For this purpose, the cooling plates are arranged close to the battery pack cases and these cooling plates are connected to a fluid circuit provided with one or more second heat exchangers dissipating the heat into the atmosphere.

Battery packs usually comprise a housing in which the battery unit cells are arranged, and it is known to cool battery packs by means of heat cooling plates or heat exchangers comprising panels arranged on the housing and through which a coolant circulates. The heat exchangers are usually made of two pressed plates tightly connected to each other, in which are formed the meanders or a space for the circulation of the fluid. In this context, it is known to equip the panels with connection points crimped or welded onto or extending from the panels and projecting from the panels to connect them to the external fluid cooling circuit.

The known plate coolers have relatively big surface whereas they are made of thin metallic plates in order to meet weight requirements. The structure of the cooling plates themselves is prone to mechanical damage which may cause the leaks therefrom. Consequently, the battery cooling may be insufficient, so the lack of structural robustness may make the entire vehicle inoperable.

It would be desirable to provide means of protecting the cooling plate for cooling of heat sources, in particular battery packs or modules, which would allow protecting cooling plate from being damaged.

Further it would be desired that these means are relatively light an inexpensive to produce.

Further, it would be desired to provide fixation points for auxiliary devices in the vicinity of the cooling plate.

Further, it would be desired to insulate the auxiliary devices from the battery pack.

Further, it would be desired to provide means of protecting auxiliary devices and modules from the mechanical damage.

### SUMMARY OF THE INVENTION

The object of the invention is, among others, a cooling assembly for an electric vehicle comprising: a cooling unit comprising fluid channels for a first fluid, a first and a second plate joined in a liquid-tight manner by their peripheral edges, the first plate being stamped so as to form a plurality of channels separated by raised ribs, the second plate comprising a substantially flat surface, wherein the cooling assembly further comprises a frame fixed to the cooling unit, wherein the frame is made of different material than the cooling unit.

Preferably, the first plate is located between the second plate and the frame.

Preferably, the frame comprises a base portion overlapping at least the first plate.

Preferably, the frame comprises at least two lateral walls protruding substantially in perpendicular from the base portion, wherein the lateral walls are configured to engage in a fixing manner at least with the corresponding peripheral edges of the cooling unit.

Preferably, the lateral walls are lined up with the second plate.

Preferably, the lateral walls protrude beyond the second plate.

Preferably, at least one lateral wall comprises a clip portion.

Preferably, at least one lateral wall comprises a recess configured to accommodate at least corresponding peripheral edge.

Preferably, the cooling plate comprises at least one opening located in-between the peripheral edges, the opening being configured to receive at least one auxiliary device.

Preferably, the frame comprises at least one recessed section corresponding to the opening, wherein the recessed section is configured to at least partially accommodate the auxiliary device.

Preferably, the frame comprises at least one through-opening corresponding to the opening, wherein the through-opening is configured to entirely accommodate the auxiliary device.

Preferably, the comprises at least one layer of elastic material sandwiched between the first plate and the frame.

Preferably, the cooling plate comprises an inlet, an outlet for the first fluid, the frame comprises at least one opening port located in the vicinity of inlet and/or outlet, so that the inlet and/or outlet may at least partially protrude through the frame .

Another object of the invention may be an assembly for the electric vehicle comprising the cooling assembly according to all preceding claims, wherein the assembly further comprises a battery pack, wherein the battery pack is in contact with the frame.

Another object of the invention may be a motor vehicle comprising the aforementioned cooling assembly.

### BRIEF DESCRITPTION OF DRAWINGS

Examples of the invention will be apparent from and described in detail with reference to the accompanying drawings, in which:
Fig. 1 shows a standalone known cooling plate.
Fig. 2 shows an exploded view of the cooling plate and a frame
Fig. 3 shows a cross section of the cooling assembly.
Fig. 4 shows another cross section of the cooling assembly from Figs 2 and 3 in which the lateral walls of the frame comprise fixing means.
Fig. 5 shows an exploded view of the cooling assembly comprising the frame, an elastic material, the cooling plate and exemplary auxiliary devices.
Fig. 6 shows an exemplary architecture of the assembly comprising cooling assembly and a battery pack.

### DETAILED DESCRIPTION OF EMBODIMENTS

The invention relates to a cooling assembly. In particular, the invention relates to cooling assembly for an electric vehicles or hybrid vehicles.

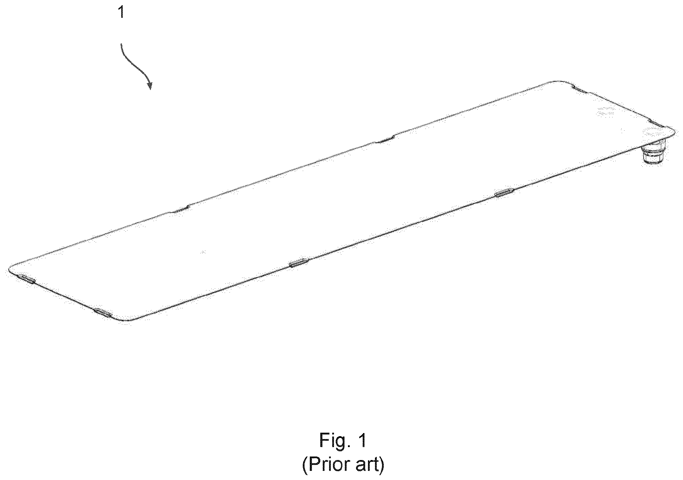

Standard cooling plates, cooling modules, etc. aim to absorb the heat from the battery or battery pack. However, the architecture of the cooling plates does not protect the cooling plates against the damage caused by impact, excessive forces coming from, for example, the chassis while the vehicle undergoes harsh maneuvers, bumps, etc. Increasing, for example, the thickness of the sub- components does not necessarily improve the robustness of the cooling plate, yet surely has a negative impact on the weight and cooling performance thereof. The exemplary, standalone prior art cooling plate 1 is shown in Fig. 1.

The subject-matter of the invention described in further paragraphs and depicted on respective figures aims to solve the aforementioned problems.

The subject- matter of an invention is a cooling assembly 100 (herein after referred to as "assembly") for an electric vehicle. Term electric vehicle should be understood as any type of vehicle comprising and electric motor which puts said vehicle in motion and a battery which provides the energy for said engine. The term electric vehicle should thus not be limited to automobiles only, but it includes also buses, motorcycles, mopeds, remotely controlled vehicles, utility vehicles, etc.

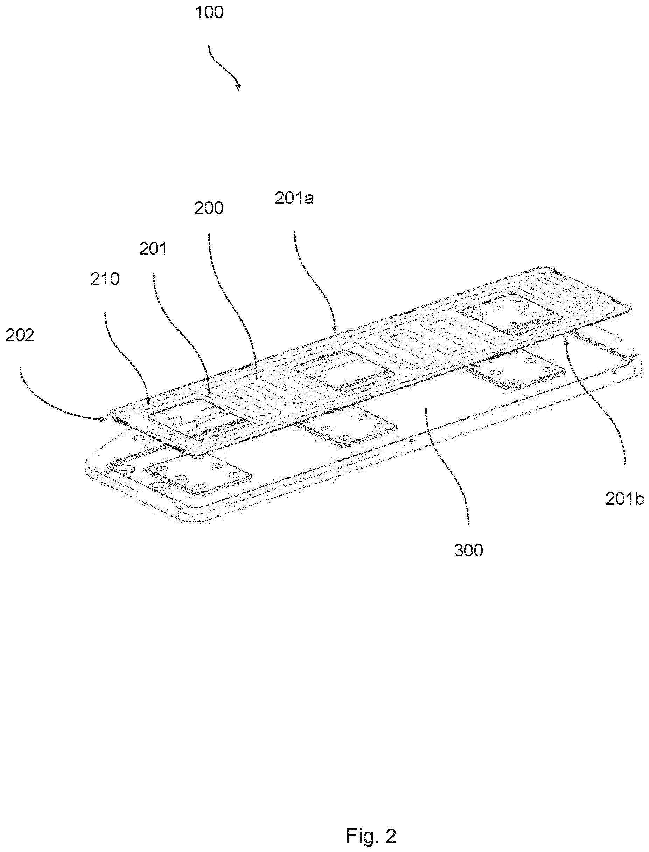

Fig. 2 shows the assembly 100 in the pre-assembly mode which comprises, inter alia, a cooling unit 200 and a frame 300. The cooling unit 200 is suitable for circulation of the first fluid therein, wherein the first fluid may be, for example, the coolant. The cooling unit 200 may further comprise a plurality of fluid channels 210 for the first fluid. In order to form said fluid channels 210, the cooling unit 200 may comprise a first plate 201 and a second plate 202. The plates 201, 202 may be joined in a liquid-tight manner by respective peripheral edges 201a, 201b. The plates 201, 202 may have an essentially rectangular shape, however, other shapes are also envisaged. In other words, the peripheral edges 201a and 201b of the cooling unit 200 may outline various contours. Further, one of the plates 201 and 202, or both of them may protrude beyond peripheral edges 201a and 201b to form, for example, mounting points for the cooling plate 200.

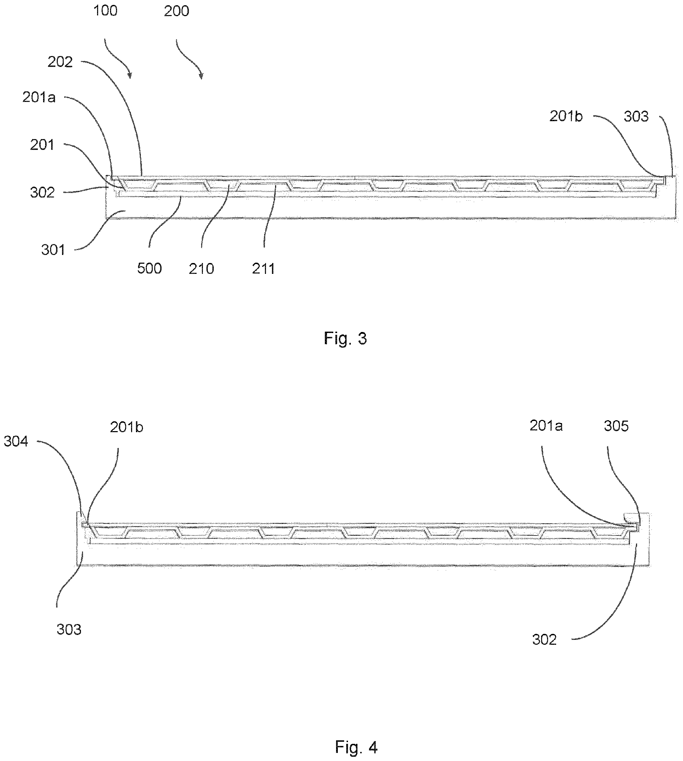

Fig. 3 shows a cross-section of the assembly 100, showing the cooling plate 200 and the frame 300. The first plate 201 may be stamped so as to form said plurality of channels 210. The channels 210 may be separated by raised ribs 211. As shown in one of the figures, the shape of said ribs 211 may be trapezoidal, however, other types of ribs 211 are also envisaged. The second plate 202 may comprise a substantially flat surface. As shown in Figs 3 and 4, the inner face of the second plate is in contact with an inner face of the first plate, in particular, a flattened portions of the ribs 211. The cooling plate 200 is usually made of metallic material, preferably aluminum. However, the first plate 201 may be of the same or different chemical composition than the second plate 202.

The cooling assembly 100 further comprises the frame 300. The frame 300 may be made of synthetic material such as plastic or composite. The frame 300 forms a structure which is able to withstand torsional, bending and other forces better than the standalone cooling plate 200. Moreover, the frame 300 may act as an electric insulator. Similarly, the frame 300 may isolate the cooling plate from ambient temperature. In principal, the frame 300 is made of different material than the cooling unit 200.

As shown in Fig. 3, the first plate 201 may be located between the second plate 202 and the frame 300. This enables the cooling assembly 100 to form more advanced modules which will be discussed in further paragraphs.

In order to provide structure which will facilitate accommodating the cooling plate 200 in the frame 300, so that the cooling assembly 100 may be formed, the frame 300 may comprise a base portion 301 which comprises substantially flat surface parallel to the cooling plate 200. The flat structure of the base portion 301 and the first plate 201 may be at least partially immobilized with respect to each other thanks to the friction generated between flat surfaces of these sub-components. Generally, the base portion 301 creates the grater frictional force with the first plate 201 than, for example, two metallic plates. Further, the base portion 301 may overlap at least the first plate 201. This allows to protect the entire surface of the cooling plate 200, in particular its fluid channels 210 formed between the plates 201, 202.

The frame 300 may further comprise at least two lateral walls 302, 303 protruding substantially in perpendicular from the base portion 301. The lateral walls 302, 303 should be regarded as any portion protruding from the peripheral walls of the frame 300 in the direction of the cooling plate 200. In other words, the lateral walls 302, 303 may form any the structure which protrudes beyond the general plane of the base portion 301. The lateral walls 302, 303 may be configured to engage in the fixing manner at least with the corresponding peripheral edges 201a, 201b of the cooling unit 200. This engagement facilitates to form a unitary cooling assembly 100, i.e. the assembly in which at least the cooling plate 200 is immobilized with respect to the frame 300.

In order to reduce the packaging, the lateral walls 302, 303 may be lined up with the second plate 200, as shown in Fig. 3. In particular, the terminal portions of the lateral walls 302, 303 may by lined up with the surface of the second plate 202. The term lined up refers to an orderly linear arrangement of the lateral walls 302, 303 and the cooling plate 200.

In order to compensate the tolerances between the cooling plate 200 and the frame 300, the assembly 100 may further comprise at least one layer of elastic material 500 sandwiched between the first plate 201 and the frame 300. The term "elastic material" may refer to any material which has a different structure than the cooling plate 200 and/or the frame 300. For example, the elastic material may be a foam or a sponge-like material which compensates the tolerances and may capable of increasing the friction between the cooling plate 200 and the frame 300. Alternatively, the elastic material 500 may be in form of ribs, dimples or fins. Depending on the desired effect, the elastic material may be able to conduct the heat and/or electricity between the cooling plate 200 and the frame, or it may insulate these sub-components.

According to Fig. 4, the lateral walls 302, 303 may protrude beyond the second plate 200. This allows to provide enhanced fixation of the cooling plate 200 to the frame 300.

Some of the above- mention fixation means are shown in Fig. 4. Here, the first lateral wall 302 may comprise a clip portion 304. The clip portion 304 is made integral with the lateral wall 302, 303 on which it is located. The clip portion 304 may be in form of substantially triangular portion, wherein one of its sides protrudes inwardly, i.e. from the first lateral wall 302 towards the second lateral wall 303, so that it protrudes slightly beyond the second plate 202 in the assembled mode of the assembly 100. Other side of the clip portion slopes outwardly, i.e. from the second lateral wall 303 towards the first lateral wall 302.

As further shown in Fig. 4, the second lateral wall 303 may comprise a recess 305. The recess 305 is substantially parallel to the adjacent peripheral edge 201a, 201b of the cooling plate 200. The recess 305 may by in form of substantially C-shaped portion configured to accommodate at least corresponding peripheral edge 201a, 201b. The free ends of C-shaped portion are facing inwardly, i.e. towards the first lateral wall 302. The distance in-between the free ends of the C-shaped portion forming the recess 305, have the same thickness as the adjacent peripheral edge 201a, 202b of the cooling plate 200, wherein the thickness is measured in a direction perpendicular with respect to the general plane of the cooling plate 200, or the second plate 202 only. Naturally, the recess 305 may comprise tolerances, i.e. it may comprise slightly bigger thickness than the adjacent peripheral edge 201a, 202b of the cooling plate 200.

The combination of the recess 305 and the clip portion 304 described in previous paragraphs allows an effortless fixation of the cooling plate 200 to the frame 300. In a pre- assembly mode, the cooling plate 200 may be inclined with respect to the frame 300, so that one of the peripheral edges 201a, 201 b may be inserted in the recess 305. When the cooling plate 200 is in contact with the recess 305, it may be rotated around the axis formed by the peripheral edge 201a, 201b which has just been inserted into the recess 305. The rotation continues until the other peripheral edge 201a, 201b overcomes the resistance generated by the clip portion 304, so that the cooling plate 200 clips into clip portion 204. As the clip portion 304 is made of the same material as the entire frame 300, it is able to yield and bend, in order to allow fixation of the cooling plate 200. The sloped portion of the clip portion 304 allows the peripheral edge 201a, 201b, to slide on its surface towards the base portion 301 of the frame 300.

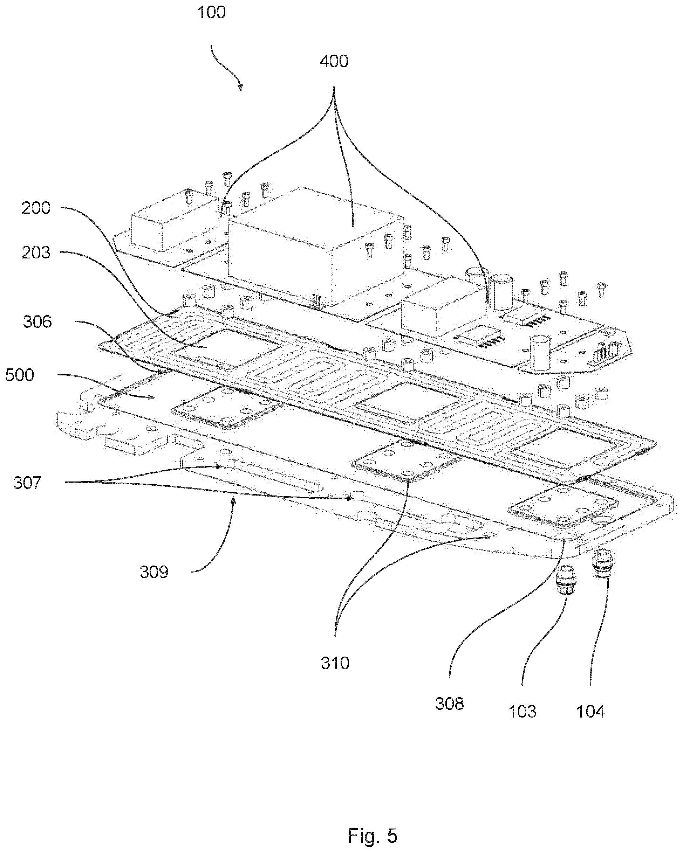

As shown in Fig. 5, the cooling assembly 100 may also serve other purposes, thanks to structural robustness of the frame 300 and relatively small packaging thereof. For example, the cooling plate 200 of the cooling assembly 100 may comprise at least one opening 203 located in-between the peripheral edges 201a, 201b. In other words, the opening 203 is located within the outline of the cooling plate 200. The opening 203 allows the cooling plate 200 to receive at least one auxiliary device 400. The auxiliary device may usually be an electronic or electric device, however, other types of auxiliary devices 400 are also envisaged. The auxiliary device 400 may penetrate through the surface of the cooling plate 200 through the opening 203. Alternatively, the cooling plate may comprise an incision, wherein the auxiliary device 400 protrudes beyond the perimeter of the cooling plate 200 delimited by its peripheral edges 201a, 201b. It is to be noted, that the shape of the opening 203 may correspond to the shape of the auxiliary device 400 inserted therein. It is also to be noted, that each individual opening 203 may be configured to receive more than one auxiliary device 400. Naturally, the frame 300 may also comprise similar incisions, i.e. the cutouts in the outline of the frame which allow to insert any auxiliary device therein.

Accordingly, the frame 300 may also comprise the means for accommodating at least one auxiliary device 400 in the cooling assembly 100.

For example, the frame 300 may comprise at least one recessed section 306. The recessed section may correspond to the opening 203 formed in the cooling plate 200. The recessed section 306 may be configured to at least partially accommodate the auxiliary device 400. It means that at least a portion of the auxiliary device 400 may protrude beyond the recessed section. Alternatively, the recessed section 306 may accommodate the auxiliary device 400 entirely. This applies mainly to the devices comprising thickness smaller than the depth of the recessed section, wherein the depth and the thickness are measured in perpendicular with respect to the general plane of the base portion 301. Optionally, the frame may comprise channels on or in its structure, which allow to accommodate, for example, wiring for said auxiliary device 400.

The frame 300 may comprise at least one through-opening 307. It means, that the auxiliary device 400 may penetrate through the frame 300. In other words, the through-opening 307 may be configured to entirely accommodate the auxiliary device 400. The through-opening 307 may correspond to the opening 203. Alternatively, the through-opening 307 may accommodate the auxiliary device 400, the cooling plate 200 may form integral structure corresponding to said through-opening 307, so that the auxiliary device penetrates through the frame 300 and it is supported on the cooling plate 200. The through-opening 307 and the recess 305 may also be located beyond the outline of the cooling plate 200. This allows the frame 300 to receive auxiliary devices 400 without obstructing the cooling plate 200 space.

The frame 300 may comprise at least on protuberance 311. The protuberance 311 may be a portion protruding from the base portion 301 substantially towards the cooling plate 200. The protuberance 311 may be located substantially between the lateral walls 302, 303. Thus, the protuberance 311 is located within the outline of the cooling plate 200. The protuberance 311 may protrude through the opening 203, so that it is at the same level as the outer face of the second plate 202. The protuberance 311 may also be configured to provide fixing point for at least one auxiliary device 400 and allows to support the auxiliary device 400, so that the weight of the auxiliary device 400 is transferred to the frame 300, not to the cooling plate 200. The protuberance 311 may correspond to shape of the opening 203, yet depending on the desired architecture it may protrude through the opening 203 only partially, i.e. its shape does not correspond to the shape of the opening 203. The protuberance 311 also serves as additional means of immobilizing the cooling plate 200 with respect to the frame 300.

In order to further facilitate the mechanical robustness of the cooling assembly 100, the frame 30 may comprise ribs 309 on its structure. The ribs 309, may protrude outwardly from the frame 300 in an opposite direction with respect to the cooling plate 200.

The frame 300 may further comprise fixing means 310. The fixing means 310 may be located on any face of the base portion 301 or any face of the lateral walls 302, 303, depending on the desired location. Since the fixing means 310 are in form of holes integrated in the frame 300, they do not protrude beyond the surface. The fixing means 310 may be in form of threaded holes, wherein the thread is formed directly in plastic, or the fixing means may receive a metallic adapter 319 which comprises threaded opening, wherein the adapter is connected with the fixing means 310 by tight connection, or by a glue. Naturally, the adapter 319 may receive bolts or screws, which are visible in Fig.5.

In order to provide the fluidal communication between the cooling plate 200 and the first fluid loop, the cooling plate 100 may comprise an inlet 103 and an outlet 104 for the first fluid. Depending on the cooling plate 200 architecture, the inlet 103 may be located in the vicinity of the outlet 104, or they may be distanced from each other. The frame 300 may comprise at least one opening port 308 located in the vicinity of inlet 103 and/or outlet 104. In other words, the frame 300 comprises at least one opening port 308 which corresponds to inlet 103 and/or outlet 104. The frame 300 may comprise either one opening port 308 for each of the inlet 103 and outlet 104. Alternatively, the opening port 308 is mutual for inlet 103 and outlet 104, if the inlet 103 is located relatively close to the outlet 104. The opening port 308 may be so configured, that the inlet 103 and/or outlet 104 may at least partially protrude through the frame 300.

The inlet 103 and/or the outlet 104 may be made of metallic material, such as aluminum, yet other materials, for example, synthetic are also envisaged.

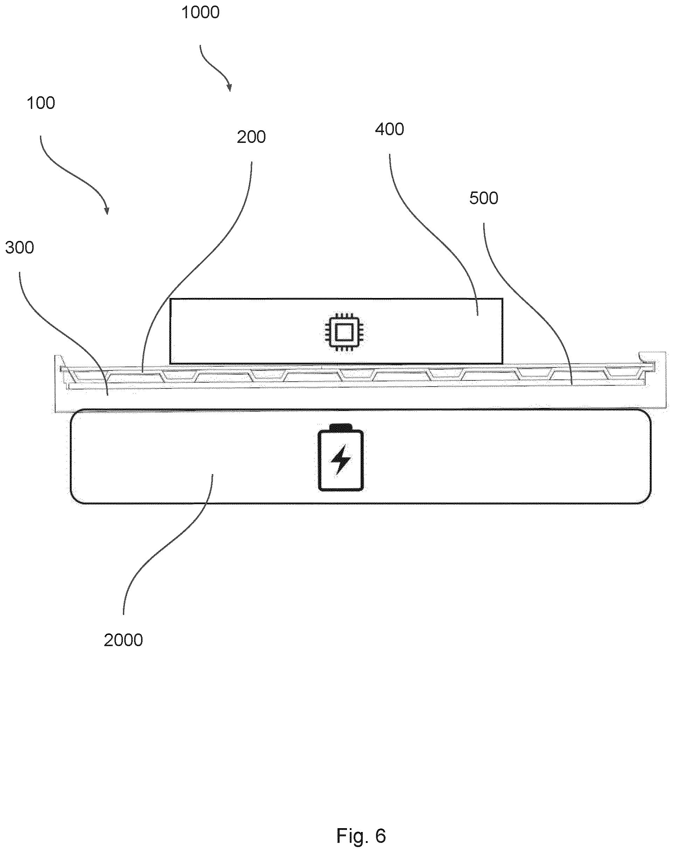

Another object of the invention may be an assembly 1000 for the electric vehicle, as shown in Fig. 6. The assembly 1000 may comprise the cooling assembly 100 described in previous paragraphs, wherein the assembly 1000 further comprises a battery pack 2000. The battery pack 2000 should be regarded as any number and type of the batteries which is suitable for powering the electric motor of the vehicle. As shown in Fig. 6 the battery pack 2000 may be in contact at least with the frame 300, so that the frame is located between the cooling plate 200 and the battery pack 2000.

In other embodiment of an invention, the battery 2000 could be located on the same side of the frame 300 as the cooling plate 200. In an embodiment in which the frame 300 comprises lateral walls 302, 303, the battery pack 2000 may be at least partially received in the frame 300. In other words, the lateral walls 302, 303 at least partially overlap the battery pack 2000. This facilitates providing a firm assembly 1000 in which the battery pack 2000 is at least partially immobilized with respect to the cooling assembly 100. With respect to location, the cooling assembly 100 may be located above the battery pack 2000 with respect to ground level.

Another object of the invention may be motor vehicle comprising either aforementioned cooling assembly 100 or the assembly 1000.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A cooling assembly (100) for an electric vehicle comprising: a cooling unit (200), a first and a second plate (201, 202) joined in a liquid-tight manner by at least their peripheral edges (201a, 201b), the first plate (201) being stamped so as to form a plurality of channels (210) for a first fluid separated by raised ribs (211), the second plate (202) comprising a substantially flat surface, wherein the cooling assembly (100) further comprises a frame (300) fixed to the cooling unit (200), wherein the frame (300) is made of different material than the cooling unit (200).

2. The cooling assembly (100) according to claim 1, wherein the first plate (201) is sandwiched between the second plate (202) and the frame (300).

3. The cooling assembly (100) according to any of the preceding claims, wherein the frame (300) comprises a base portion (301) encompassing at least the first plate (201).

4. The cooling assembly (100) according to any of the preceding claims, wherein the frame (300) comprises at least two lateral walls (302, 303) protruding substantially in perpendicular from the base portion (301), wherein the lateral walls (302, 303) are configured to engage in a fixing manner at least with the corresponding peripheral edges (201 a, 201b) of the cooling unit (200).

5. The cooling assembly (100) according to the preceding claim, wherein the lateral walls (302, 303) are at the same level as the second plate (200).

6. The cooling assembly (100) according to claim 4, wherein lateral walls (302, 303) protrude beyond the second plate (200).

7. The cooling assembly (100) according to the preceding claim, wherein at least one lateral wall (302, 303) comprises a clip portion (304).

8. The cooling assembly (100) according to any of the preceding claims, wherein at least one lateral wall (302, 303) comprises a recess (305) configured to accommodate at least a corresponding peripheral edge (201a, 201b).

9. The cooling assembly (100) according to any of the preceding claims, wherein the cooling plate (200) comprises at least one opening (203) located within its outline, the opening (203) being configured to receive at least one auxiliary device (400).

10. The cooling assembly (100) according to the preceding claim, wherein the frame (300) comprises at least one recessed section (306) corresponding to the opening (203), wherein the recessed section (306) is configured to at least partially accommodate the auxiliary device (400).

11. The cooling assembly (100) according to any of claims 9 or 10, wherein the frame (300) comprises at least one through-opening (307) corresponding to the opening (303), wherein the through-opening (307) is configured to accommodate the auxiliary device (400).

12. The cooling assembly (100) according to any of the preceding claims, wherein the assembly (100) comprises at least one layer of elastic material (500) sandwiched between the first plate (201) and the frame (300).

13. The cooling assembly (100) according to any of the preceding claims, wherein the cooling plate (100) comprises an inlet (103), an outlet (104) for the first fluid, the frame (300) comprises at least one opening port (308) located in the vicinity of inlet (103) and/or outlet (104), so that the inlet (103) and/or outlet (104) may at least partially protrude through the frame (300).

14. An assembly (1000) for the electric vehicle comprising the cooling assembly (100) according to all preceding claims, wherein the assembly (1000) further comprises a battery pack (2000), wherein the battery pack (2000) is in contact with the frame (300).

15. A motor vehicle comprising the cooling assembly (100) according to claims 1-13.
